# EUROPÄISCHE PATENTSCHRIFT

(11) **EP 2 296 776 B1**
(45) Veröffentlichungstag und Bekanntmachung des Hinweises auf die Patenterteilung: **12.10.2016**
(21) Anmeldenummer: 09772056.9
(22) Anmeldetag: 27.05.2009
(51) Int. Cl.: B01D 29/11, B01D 29/21

(54) **ADAPTER ZUR BEFESTIGUNG EINES FILTERELEMENTES**
ADAPTER FOR FASTENING A FILTER ELEMENT
ADAPTATEUR DE FIXATION D'UN ÉLÉMENT FILTRANT

(30) Priorität: 03.07.2008 DE 102008031170
(43) Veröffentlichungstag der Anmeldung: 23.03.2011
(73) Patentinhaber: Sartorius Stedim Biotech GmbH, 37079 Göttingen (DE)
(72) Erfinder: GRUMMERT, Ulrich, 37242 Bad Sooden-Allendorf (DE); LAUSCH, Ralf, 37079 Göttingen (DE); NIKOLOUDIS, Paschalis, 37079 Göttingen (DE); PRADEL, Christian, 37589 Kalefeld-Sebexen (DE); SCHÜTZLER, Michael, 37124 Rosdorf (DE)
(86) Internationale Anmeldenummer: PCT/EP2009/003759
(87) Internationale Veröffentlichungsnummer: WO 2010/000356

(56) Entgegenhaltungen:
- EP-A2- 1 156 538
- DE-C1- 4 325 997
- US-A1- 2002 017 497
- US-B1- 6 543 625

## Beschreibung

Die Erfindung betrifft einen Adapter zur Befestigung eines Filterelementes in einer zylindrischen Aufnahmeöffnung eines Bodenteils eines Filtergehäuseunterteils mit mindestens einer am Adapterumfang in einer umlaufenden Nut angeordneten Dichtung zur fluiddichten Trennung eines die Außenhülle des Filters umgebenden Unfiltratraumes, aus dem zu filtrierendes Medium dem Filter zuführbar ist, von einem Filtratraum, in den das Filtrat aus dem Filter einleitbar ist.

Aus der DE 33 35 938 C1 ist ein mehrteiliges Filtergehäuse zur Druckfiltration von Fluiden bekannt, das ein Gehäuseoberteil und ein Gehäuseunterteil mit einem Gehäuseboden aufweist, der über zylindrische Öffnungen zur Aufnahme von Filterkerzen bzw. Filterelementen über deren Adapter verfügt und einen die Außenhülle der Filterkerze umgebenden Unfiltratraum von einem Filtratraum trennt, über den die Filterkerzen jeweils mit einem zentralen Auslass verbunden sind. Die Filterkerzen weisen dabei in vertikaler Richtung an ihrem unteren Ende eine fluiddichte ringförmige Endkappe mit einem zentralen Auslass auf, die mit dem rohrförmigen Adapter verbunden ist, über den die Filterkerze in die zylindrische Öffnung des Gehäusebodens eingesteckt wird. In dem Unfiltratraum befindet sich die Filterkerze mit ihrer fluiddurchlässigen Außenhülle, wobei die ringförmige Endkappe mit ihrem dem Gehäuseboden abgewandten oberen Rand einen fluiddichten Übergangsbereich zur Außenhülle bildet. Zur Abdichtung des Adapters in der zylindrischen Öffnung des Gehäusebodens weist der bekannte Adapter zwei parallele, umlaufende Nuten auf, in denen jeweils ein O-Ring als Dichtung angeordnet ist.

Nachteilig bei dem bekannten Adapter, der sich grundsätzlich bewährt hat, ist, dass die O-Ringe bzw. Schnurringdichtungen gesondert montiert werden müssen. Dabei können, zumindest beim Benutzer, falsche Dichtungen eingesetzt oder gar eine der Dichtungen weggelassen werden.

Aus der DE 43 25 997 A1 ist ein Adapter zur Befestigung eines Filterelementes auf einem Flüssigkeitsablaufstutzen bekannt. Der Adapter weist an seiner dem Flüssigkeitsablaufstutzen zugewandten Innenwandung eine umlaufende Nut mit einer in ihr angeordneten Dichtung zur fluiddichten Trennung eines die Außenhülle des Filters umgebenden Unfiltratraumes auf, aus dem zu filtrierendes Medium nach Filtration in einen Filtratraum zuführbar ist. Die Dichtung weist dabei zumindest an einer die Basisfläche der Nut begrenzenden Seitenwand einen Abstand auf.
Gemäß der Lehre der DE 43 25 997 A1 wird eine sichere Abdichtung durch die das Flüssigkeitsfilter durchströmende, zu filternde Flüssigkeit bewirkt, weil diese aufgrund der während der Durchströmung des Filtereinsatzes entstehenden Druckdifferenz den Dichtring innerhalb der Nut in Richtung zu dem Teil des Flüssigkeitsfilters mit dem niedrigeren Flüssigkeitsdruck verschiebt. Hierdurch wird der Dichtring bzw. die Dichtung im Betrieb des Flüssigkeitsfilters bzw. Filterelementes an den Flüssigkeitsableitungsstutzen und eine ihm benachbarte Begrenzungsfläche der Nut angepresst, so dass hier eine Abdichtung trotz einer geringen oder sogar nicht vorhandenen elastischen Vorspannung des Dichtringes bzw. Dichtung gewährleistet ist.

Bei der Vorrichtung der DE 43 25 997 A1 ist immer ein Anstrom von zu filtrierendem Fluid durch den Ringspalt in die Nut notwendig, damit der Dichtring bzw. die Dichtung nach oben in die Anschlagposition an den Stirnscheibenteil gedrückt wird und weil erst dann eine Abdichtung erzielt wird.

Die DE 20 2006 014 784 U1 offenbart einen Ringfiltereinsatz, bei welchem eine einen Filterstoffkörper stirnseitig abdeckende Stirnscheibe einstückig aus einer durchbrochenen Scheibe und einem daran angeformten Kragen besteht. Der Kragen weist eine axiale Stützfläche und eine radiale Stützfläche auf. Ein Radialdichtring mit Taschen zur Wärmeenergieabfuhr ist in einem Zweikomponentenverfahren bzw. durch Anspritzen auf diese Stützflächen aufbringbar.
Dieser Radialdichtring wird nur unten von der axialen Stützfläche und seitlich von der radialen Stützfläche begrenzt, während er in Filtratabflussrichtung offen ist. Der Radialdichtring ist an den Kragen der Stirnscheibe angeformt, d.h. an den Innenumfang des Adapters.

Der Radialdichtring ist zum einen durch die hohlen Taschen nur relativ aufwendig herzustellen und zum anderen sind Defekte des Radialdichtrings bei der Herstellung nur schwer optisch zu erkennen, insbesondere wenn die Materialstege oder der Boden der hohlen Taschen bricht und dort nachfolgend Undichtigkeiten auftreten.

Weiterhin ist aus der EP 1 156 538 B1 eine Stopfenanordnung zum gasdichten Verschließen einer Zellenöffnung eines Akkumulators bekannt. Dabei weist ein Verschlussstopfen an seinem Umfang eine Nut mit einer angeformten Runddichtung auf. Die Runddichtung wurde in einem Zweikomponenten-Spritzgieß-Verfahren angeformt. Dabei wird die Nut durch die Runddichtung komplett ausgefüllt.

Weiterhin ist aus der DE 10 2005 033 665 A1 ein Aufnahmeteil für einen Stecker bekannt, das in einer innen umlaufenden Nut eine eingespritzte Dichtung aufweist. Auch hierbei wird die Nut komplett mit dem Dichtmaterial ausgefüllt.

Nachteilig beim kompletten Ausfüllen einer Nut mit dem Material der Dichtung ist, dass der zur Volumendeformation notwendige Freiraum außerhalb der Nut geschaffen werden muss.

Nachteilig ist insbesondere, dass die Toleranzen zwischen Adapter und Aufnahmeöffnung geändert werden müssen, um Freiraum für die Volumendeformation zu schaffen.

Weiterhin ist aus der DE 44 22 842 C1 eine Vorrichtung mit einem Gehäuse mit mindestens zwei Einzelteilen bekannt, die unter Verwendung elastischen Dichtungsmaterials flüssigkeitsdicht miteinander verbunden sind. Mindestens eines der Einzelteile weist zwei Materialkomponenten auf, deren eine das Dichtungsmaterial ist und eine Dichtung bildet, wobei höchstens eine der beiden Materialkomponenten als Vorformling oder Einlegeteil in einer Spritzform mit dem Dichtungsmaterial durch Anspritzen verbunden ist, oder aber beide Komponenten in einer Zweikomponenten-Spritzform, also einer Spritzform mit zwei Kavitäten, zusammengespritzt sind.

Weitere Filterdichtungen sind beispielsweise aus der US 2002/0017497 und der US 6,543,625 bekannt.

Aufgabe der vorliegenden Erfindung ist es daher, den bekannten Adapter zur Befestigung eines Filterelementes in einer zylindrischen Aufnahmeöffnung eines Bodenteils so zu verbessern, dass auf eine separate Montage der Dichtung verzichtet werden kann. Weiterhin soll eine Veränderung der Toleranzen zwischen Adapter und Aufnahmeöffnung möglichst vermieden werden, um sowohl den Einsatz neuer Adapter als auch alter bekannter Adapter in bereits vorhandenen Aufnahmeöffnungen zu ermöglichen.
Die Aufgabe wird in Verbindung mit dem Oberbegriff des Anspruches 1 dadurch gelöst, dass die Dichtung mit einer Basisfläche der umlaufenden Nut durch Anspritzung verbunden ist und dass die Dichtung zu mindestens einer die Basisfläche begrenzenden Seitenwand der Nut einen Abstand aufweist. Dadurch, dass die Dichtung auf eine Basisfläche der umlaufenden Nut angespritzt ist, kann auf eine separate Montage verzichtet werden. Gleichzeitig ist sichergestellt, dass der vom Hersteller freigegebene, korrekte Dichtring aus dem vorgesehenen Material in der Nut des Adapters angeordnet ist. Durch den Abstand der Dichtung zu mindestens einer die Basisfläche begrenzenden Seitenwand der Nut entsteht ein Raum zur Aufnahme des Deformationsvolumens der Dichtung beim Einsatz in die zylindrische Aufnahmeöffnung des Bodenteils. Eine Änderung der Toleranzen zwischen zylindrischer Aufnahmeöffnung und der Außenform des Adapters kann somit unterbleiben. Dies bedeutet, dass sowohl neue Filterelemente mit dem erfindungsgemäßem Adapter als auch alte Filterelemente mit einem bekannten Adapter in vorhandene zylindrische Öffnungen von bekannten Filtergehäusen bzw. deren Bodenplatten eingesetzt werden können.

Gemäß einer nicht erfindungsgemäßen Ausführungsform ist die Dichtung mittig in der Nut angeordnet und weist zu beiden, die Basisfläche der Nut begrenzenden Seitenwänden einen Abstand auf. Dies ist insbesondere bei Anspritzen einer Dichtung in einer einzelnen Nut relativ einfach möglich.

Erfindungsgemäß ist eine zweite Dichtung in einer zweiten umlaufenden Nut auf deren Basisfläche angespritzt. Die erste und die zweite Dichtung sind dabei in zueinander parallel angeordneten Nuten auf deren Basisflächen angespritzt, wobei die Dichtungen an den beiden einander zugewandten inneren Seitenwänden der Nuten abstandsfrei anliegen. Beim Spritzen werden die Abstände durch entsprechende Werkzeugeinsätze ausgefüllt.

Als besonders vorteilhaft hat sich erfindungsgemäß erwiesen, die beiden
Dichtungen über mindestens einen, bevorzugt drei oder vier, in axialer Richtung verlaufende(n) Steg bzw. Stege miteinander zu verbinden. Dadurch bilden die beiden miteinander verbundenen Dichtungen eine besonders dichte Barriere zwischen dem Unfiltratraum und dem Filtratraum des ein Filterelement mit Adapter aufweisenden Filtergehäuses.

Gemäß einer bevorzugten Ausführungsform der Erfindung ist eine dritte Dichtung in einer umlaufenden Nut im Bereich einer Endkappe des Filterelementes auf die Basisfläche der Nut angespritzt. Durch die Anordnung der dritten Dichtung im Bereich der dem Adapter benachbarten Endkappe des Filterelementes kann das Filterelement einschließlich Endkappe in eine entsprechende Aufnahmeöffnung des Bodenteiles eingesetzt werden, so dass praktisch kein Totraum im Unfiltratraum verbleibt und das gesamte zu filtrierende im Unfiltratraum sich befindende Medium durch den Filter filtriert und in den Filtratraum abgeführt werden kann.

Nach einer bevorzugten Ausführungsform der Erfindung sind die Dichtungen aus einem thermoplastischen Elastomer, einem thermoplastischen Urethan oder aus Silikon ausgebildet.

Nach einer bevorzugten Ausführungsform der Erfindung weist der Adapter einen Hauptkörper mit einem umspritzten Verstärkungsring auf. Der Adapter ist vorzugsweise mit einer Endkappe des Filterelementes verschweißt. Er kann aber auch an die Endkappe direkt angeformt sein.

Weitere Merkmale der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:

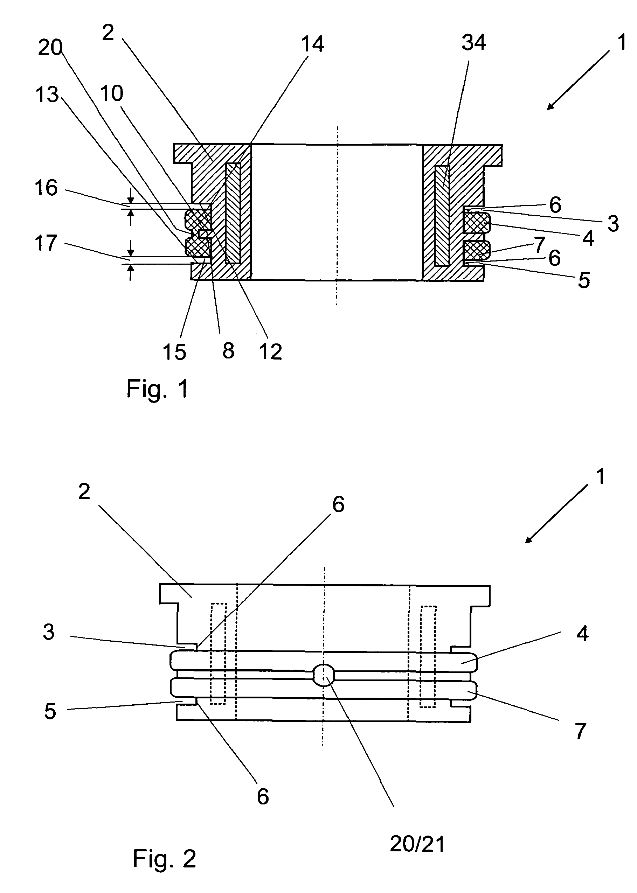

- Figur 1:: eine Seitenansicht eines Adapters mit zwei parallelen Dichtungen im Schnitt,
- Figur 2:: eine Seitenansicht des Adapters von Figur 1,
- Figur 3:: eine Seitenansicht eines Filterelementes mit Endkappe und Adapter sowie mit gestrichelt angedeuteter Bodenplatte eines Filtergehäuses und
- Figur 4:: eine Seitenansicht eines weiteren Filterelementes mit einer dritten Dichtung in einer Nut der Endkappe des Filterelementes.

Ein Adapter 1 besteht im Wesentlichen aus einem Hauptkörper 2, einer umlaufenden Nut 3 und einer Dichtung 4.

In dem Hauptkörper 2 des Adapters 1 ist parallel zu der umlaufenden ersten Nut 3 eine umlaufende zweite Nut 5 angeordnet. Die umlaufenden Nuten 3, 5 weisen jeweils eine Basisfläche 6 auf, wobei in der ersten umlaufenden Nut die Dichtung 4 und in der zweiten umlaufenden Nut eine zweite Dichtung 7 jeweils an die Basisfläche 6 angespritzt ist. Die Dichtungen 4, 7 liegen mit ihren inneren Seitenflächen 8, 9 an den benachbarten inneren Seitenwänden 10, 11 der Nuten 3, 5 abstandslos an bzw. sind durch Anspritzen mit den Seitenwänden 10, 11 verbunden. Zu den den inneren Seitenwänden 10, 11 abgewandten äußeren Seitenwänden 12, 13 weisen die den inneren Seitenflächen 8, 9 der Dichtungen 4, 7 abgewandten äußeren Seitenflächen 14, 15 jeweils einen Abstand 16, 17 auf, der Raum zur Aufnahme eines Deformationsvolumens der Dichtungen 4, 7 bei in die zylindrische Öffnung 18 eines Bodenteiles 19 eingesetzten Adapter 1 bildet.

Die Dichtungen 4, 7 sind über Stege 20 miteinander verbunden. Einer der Stege 20 kann dabei als Anspritzpunkt 21 genutzt werden. Es kann aber auch ein zusätzlicher Steg 22 mit einem Anspritzpunkt 23 vorgesehen sein.

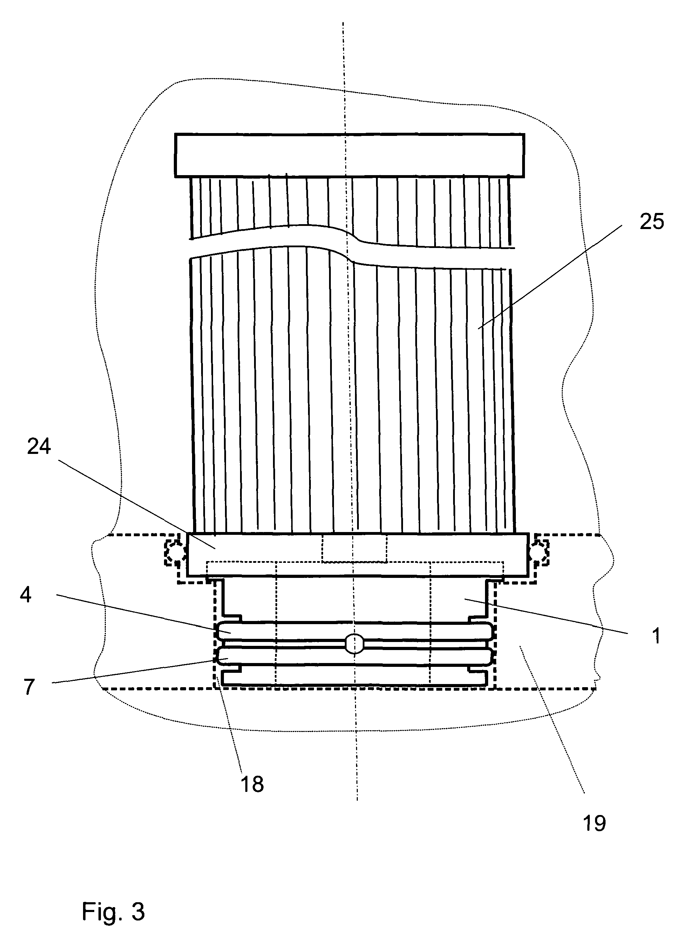

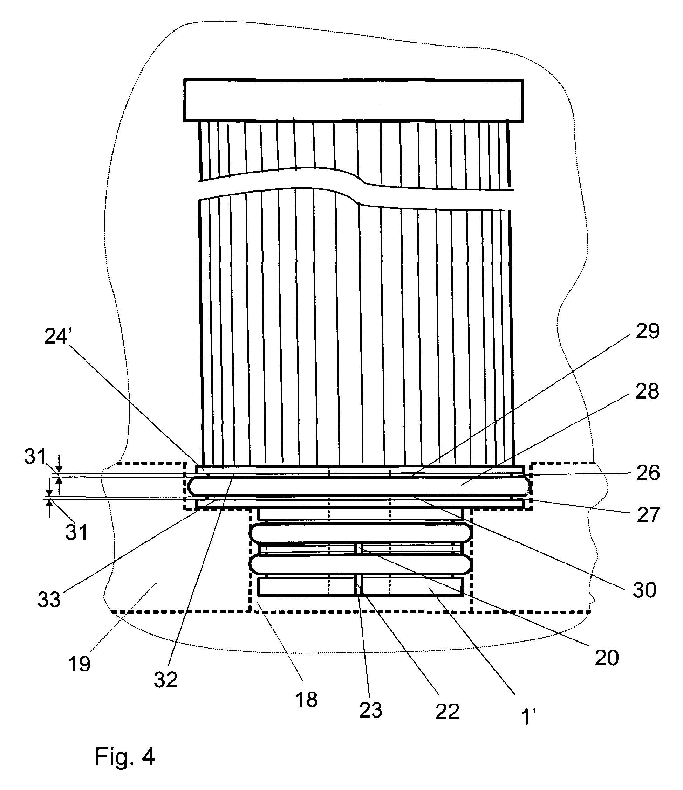

Entsprechend Figur 3 ist der Adapter 1 in eine untere Endkappe 24 eines Filterelementes 25 eingesetzt und mit dieser verschweißt.
Der Adapter 1' kann aber auch entsprechend dem Ausführungsbeispiel von Figur 4 an die untere Endkappe 24' eines Filterelementes 25' angeformt sein.

Entsprechend dem Ausführungsbeispiel der Figur 4 weist die untere Endkappe 24' an ihrem Umfang eine umlaufende dritte Nut 26 auf, an deren Basisfläche 27 eine dritte Dichtung 28 mittig so angespritzt ist, dass sie mit ihren Seitenflächen 29, 30 jeweils einen Abstand 31 zu den Seitenwänden 32, 33 der dritten Nut 26 aufweist.

Ein nicht weiter dargestelltes Werkzeug zur Herstellung eines Adapters 1, 1' besteht beispielsweise aus zwei Kavitäten in einer feststehenden Werkzeughälfte und einer drehbaren Werkzeugplatte auf einer beweglichen Werkzeughälfte. Nach jedem Spritzvorgang öffnet das Werkzeug und die drehbare Werkzeugplatte transportiert das in der ersten Kavität gefertigte Kunststoffteil vor die zweite Kavität. Dabei ergibt sich folgender Ablauf der Verfahrensschritte:
a) in die erste Kavität wird ein Verstärkungsring 34 eingelegt,
b) das Werkzeug schließt,
c) in der ersten Kavität wird der Hauptkörper 2 um den Verstärkungsring 34 gespritzt,
d) das Werkzeug öffnet,
e) die Werkzeugplatte dreht und der Hauptkörper 2 wird in die zweite Kavität transportiert,
f) in die erste Kavität wird ein Verstärkungsring 34 eingelegt,
g) das Werkzeug schließt,
h) in der ersten Kavität wird der Hauptkörper 2 um den Verstärkungsring 34 gespritzt und
   in der zweiten Kavität werden die Dichtungen 4, 7 auf den Adapter 1 gespritzt,
i) das Werkzeug öffnet,
j) der in der zweiten Kavität gefertigte Adapter 1 wird entformt,
k) die Werkzeugplatte dreht,
a) in die erste Kavität wird erneut ein Verstärkungsring 34 eingelegt,
b) das Werkzeug schließt und die Schritte c) bis k) werden wiederholt.

Selbstverständlich kann das Werkzeug auch aus drei oder mehr Kavitäten in der feststehenden Werkzeughälfte und einer drehbaren Werkzeugplatte auf der beweglichen Werkzeughälfte ausgebildet sein.

Nach jedem Spritzvorgang öffnet das Werkzeug und die drehbare Werkzeugplatte transportiert das in der ersten Kavität gefertigte Kunststoffteil vor die zweite Kavität, und das in der zweiten Kavität 2 gefertigte Kunststoffteil vor die dritte Kavität.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben.

So sind die Dichtungen 4, 7, 28 zu der der Basisfläche 6, 27 abgewandten Seite konvex ausgebildet. Grundsätzlich können sie aber auch andere Formen aufweisen.

## Patentansprüche

1. Adapter (1, 1') zur Befestigung eines Filterelementes (25, 25') in einer zylindrischen Aufnahmeöffnung (18) eines Bodenteils (19) eines Filtergehäuseunterteils mit mindestens einer am Adapterumfang in einer umlaufenden Nut (3, 5) angeordneten Dichtung (4, 7) zur fluiddichten Trennung eines die Außenhülle des Filters umgebenden Unfiltratraumes, aus dem zu filtrierendes Medium dem Filter zuführbar ist, von einem Filtratraum, in den das Filtrat aus dem Filter einleitbar ist,
**dadurch gekennzeichnet,**
**dass** die Dichtung (4, 7, 28) an eine Basisfläche (6) der umlaufenden Nut (3, 5, 26) angespritzt ist,
**dass** die Dichtung (4, 7, 28) zu mindestens einer die Basisfläche (6) begrenzenden Seitenwand (12, 13, 32, 33) der Nut (3) einen Abstand (16, 17, 31) aufweist,
**dass** eine zweite Dichtung (7) in einer zweiten umlaufenden Nut (5) an deren Basisfläche (6) angespritzt ist,
**dass** die beiden Dichtungen (4, 7) in zueinander parallel angeordneten Nuten (3, 5) angeordnet sind und
**dass** die Dichtungen (4, 7) an den beiden einander zugewandten inneren Seitenwänden (10, 11) der Nuten (3, 5) abstandsfrei anliegen, und
**dass** die beiden Dichtungen (4, 7) über mindestens einen in axialer Richtung verlaufenden Steg (20) miteinander verbunden sind.

2. Adapter nach Anspruch 1,
**dadurch gekennzeichnet,**
**dass** die beiden Dichtungen (4, 7) über zwei in axialer Richtung verlaufende Stege (20) miteinander verbunden sind.

3. Adapter nach einem der Ansprüche 1 oder 2,
**dadurch gekennzeichnet,**
**dass** eine dritte Dichtung (28) in einer umlaufenden Nut (26) im Bereich einer Endkappe (24') des Filterelementes (25') an die Basisfläche (6) der Nut (26) angespritzt ist.

4. Adapter nach einem der Ansprüche 1 bis 3,
**dadurch gekennzeichnet,**
**dass** die Dichtung (4, 7, 28) aus einem thermoplastischen Elastomer, einem thermoplastischen Urethan oder aus Silikon ausgebildet ist.

5. Adapter nach einem der Ansprüche 1 bis 4,
**dadurch gekennzeichnet,**
**dass** der Adapter (1, 1') einen Hauptkörper (2) mit einem umspritzten Verstärkungsring (34) aufweist.

6. Adapter nach einem der Ansprüche 1 bis 5,
**dadurch gekennzeichnet,**
**dass** der Adapter (1, 1') mit einer Endkappe (24, 24') des Filterelementes (25, 25') verschweißt oder an die Endkappe (24, 24') angeformt ist.

## Claims

1. Adapter (1, 1') for fastening a filter element (25, 25') in a cylindrical receiving opening (18) of a base part (19) of a filter housing lower part with at least one seal (4, 7), which is arranged at the adapter circumference in an encircling groove (3, 5), for fluid-tight separation of a non-filtrate space, which surrounds the outer casing of the filter and from which the medium to be filtered can be fed to the filter, from a filtrate space into which the filtrate can be introduced from the filter,
**characterised in that**
the seal (4, 7, 28 is injection-moulded on a base surface (6) of the encircling groove (3, 5, 26),
the seal (4, 7, 28) has a spacing (16, 17, 31) from at least one side wall (12, 13, 32, 33), which bounds the base surface (6), of the groove (3),
a second seal (7) is injection-moulded in a second encircling groove (5) at the base surface (6) thereof,
the two seals (4, 7) are arranged in grooves (3, 5) arranged to be parallel to one another, the seals (4, 7) bear against the two mutually facing inner side walls (10, 11) of the grooves (3, 5) free of spacing and
the two seals (4, 7) are connected together by way of at least one web (20) extending in axial direction.

2. Adapter according to claim 1, **characterised in that** the two seals (4, 7) are connected together by way of two webs (20) extending in axial direction.

3. Adapter according to one of claims 1 and 2, **characterised in that** a third seal (28) is injection-moulded in an encircling groove (26) in the region of an end cap (24') of the filter element (25') at the base surface (6) of the groove (26).

4. Adapter according to any one of claims 1 to 3, **characterised in that** the seal (4, 7, 28) is constructed from a thermoplastic elastomer, a thermoplastic urethane or from silicon.

5. Adapter according to any one of claims 1 to 4, **characterised in that** the adapter (1, 1') comprises a main body (2) with a reinforcing ring (34) injection-moulded around the body.

6. Adapter according to any one of claims 1 to 5, **characterised in that** the adapter (1, 1') is welded to an end cap (24, 24') of the filter element (25, 25') or is integrally formed at the end cap (24, 24').

## Revendications

1. Adaptateur (1, 1') pour la fixation d'un élément de filtre (25, 25') dans une ouverture de réception cylindrique (18) d'un fond (19) d'une partie inférieure de boîtier de filtre, comportant au moins un joint (4, 7) disposé sur le pourtour de l'adaptateur dans une rainure circonférentielle (3, 5) pour la séparation étanche aux fluides d'un compartiment de non-filtrat entourant l'enveloppe extérieure du filtre et à partir duquel le milieu à filtrer peut être conduit vers le filtre, d'un compartiment de filtrat vers lequel le filtrat peut être amené depuis le filtre,
**caractérisé en ce que**
le joint (4, 7, 28) est moulé par injection contre une surface de base (6) de la rainure circonférentielle (3, 5, 26),
le joint (4, 7, 28) présente un espacement (16, 17, 31) à au moins une paroi latérale (12, 13, 32, 33) de la rainure (3) délimitant la surface de base (6),
un deuxième joint (7) est moulé par injection dans une deuxième rainure circonférentielle (5), contre la surface de base (6) de celle-ci,
les deux joints (4, 7) sont disposés dans des rainures (3, 5) parallèles l'une à l'autre, et
les joints (4, 7) sont appliqués sans espacement contre les deux parois latérales (10, 11) intérieures opposées l'une à l'autre des rainures (3, 5), et
les deux joints (4, 7) sont raccordés l'un à l'autre par au moins une barrette (20) s'étendant dans la direction axiale.

2. Adaptateur selon la revendication 1,
**caractérisé en ce que**
les deux joints (4, 7) sont raccordés l'un à l'autre par deux barrettes (20) s'étendant dans la direction axiale.

3. Adaptateur selon la revendication 1 ou 2,
**caractérisé en ce que**
un troisième joint (28) est moulé par injection dans une rainure circonférentielle (26) contre la surface de base (6) de la rainure (26), au niveau d'un capuchon terminal (24') de l'élément de filtre (25').

4. Adaptateur selon l'une des revendications 1 à 3,
**caractérisé en ce que**
le joint (4, 7, 28) est en élastomère thermoplastique, en uréthane thermoplastique ou en silicone.

5. Adaptateur selon l'une des revendications 1 à 4,
**caractérisé en ce que**
ledit adaptateur (1, 1') présente un corps principal (2) avec une bague de renforcement (34) moulée autour de celui-ci.

6. Adaptateur selon l'une des revendications 1 à 5,
**caractérisé en ce que**
ledit adaptateur (1, 1') est soudé à un capuchon terminal (24, 24') de l'élément de filtre (25, 25') ou est moulé contre le capuchon terminal (24, 24').
